Europäisches Patentamt

European Patent Office

Office européen des brevets

(19)

(11) Numéro de publication : **0 084 490**
**B1**

(12) **FASCICULE DE BREVET EUROPÉEN**

(45) Date de publication du fascicule du brevet :
**16.04.86**

(51) Int. Cl.⁴ : **B 60 C 15/02**

(21) Numéro de dépôt : **83400077.0**

(22) Date de dépôt : **13.01.83**

(54) **Dispositif de montage d'un pneu avec manchon de verrouillage.**

(30) Priorité : **15.01.82 FR 8200607**

(43) Date de publication de la demande :
**27.07.83 Bulletin 83/30**

(45) Mention de la délivrance du brevet :
**16.04.86 Bulletin 86/16**

(84) Etats contractants désignés :
**AT BE CH DE GB IT LI LU NL SE**

(56) Documents cités :
**FR-A- 1 439 429**
**FR-A- 2 246 405**
**US-A- 2 339 542**
**US-A- 2 857 951**

(73) Titulaire : **HUTCHINSON**
**2 rue Balzac**
**F-75008 Paris (FR)**

(72) Inventeur : **Forneris, Alexandre**
**9, rue Severo**
**F-75014 Paris (FR)**

(74) Mandataire : **Ores, Irène et al**
**CABINET ORES 6, Avenue de Messine**
**F-75008 Paris (FR)**

Jouve, 18, rue St-Denis, 75001 Paris, France

**Description**

La présente invention concerne un dispositif de montage d'un pneu avec manchon de verrouillage.

La présente invention est plus particulièrement relative à un dispositif de montage d'un pneu à usages multiples, c'est-à-dire pouvant être gonflé à différentes pressions selon la nature du terrain, sur une jante à fond plat comportant un rebord fixe sur lequel s'appuie un des talons du pneu et un cercle amovible constituant le second rebord, destiné à maintenir l'autre talon du pneu.

Ce montage fait appel à une bande ou anneau de maintien et de verrouillage des talons du pneu contre les rebords de la jante, quelle que soit la pression de gonflage. On connaît de telles bandes placées sur la jante et qui ont pour but de limiter l'affaissement en cas de crevaison, lesdites bandes ayant une épaisseur supérieure à la hauteur du rebord de la jante pour éviter précisément un affaissement complet du pneu lors de sa crevaison. Par exemple, selon une réalisation décrite dans le Brevet français n° 1 304 992, la bande de verrouillage est montée sur la jante sous forme d'un anneau s'appliquant aux surfaces internes des talons sous tension préalable de façon à comprimer les talons contre les rebords de la jante. Dans ce pneu, la chambre n'est pas tubulaire, mais est constituée d'une enveloppe fendue entourant la bande de verrouillage, les bords de la fente étant maintenus par pincement entre la bande et le fond de la jante.

Le Brevet américain 2 339 542 décrit également un anneau de verrouillage de pneu associé à une chambre à air et destiné à maintenir un pneu sur une jante ; toutefois, cet anneau qui est en caoutchouc est compressible et déformable ; comme son expansion radiale est empêchée par des fils métalliques qui y sont incorporés, lorsque le pneu est gonflé et en place sur la jante, avec le disque de roue monté serré sur le moyeu de roue, en butée contre la jante, l'anneau s'arc-boute pour prendre une forme convexe ; or ce flambage annule l'une des fonctions essentielles de l'anneau de verrouillage, qui est d'empêcher la rotation du pneu sur la jante en usage tous terrains avec une pression de gonflage inférieure à la normale. Il en est de même de l'anneau de verrouillage qui fait l'objet du Brevet américain 2 857 951 qui prend automatiquement une forme arquée lorsque le pneu est dégonflé, et qui est extensible sous l'action de l'air de gonflage pour augmenter sa largeur radiale jusqu'à devenir plan.

Dans un autre dispositif connu (cf. le Brevet de la Demanderesse n° 2 246 405 correspondant au préambule de la revendication 1), lequel dispositif est destiné aux pneus sans chambre à air, la bande ou anneau de verrouillage est appliqué sur la jante également avec une tension préalable, mais sa largeur est supérieure à l'écartement intérieur des talons du pneu quand ils sont appliqués sur le rebord de la jante.

La Demanderesse a constaté après plusieurs années d'essais, que ces types de bandes de verrouillage ont un grand inconvénient économiquement très coûteux, à savoir l'obligation impérieuse de les mettre sous tension pour les placer sur la jante.

La présente invention s'est par conséquent donné pour but de pourvoir à un dispositif de verrouillage qui répond mieux aux nécessités de la pratique que les dispositifs visant au même but, antérieurement connus, notamment en ce qu'il ne nécessite plus d'être appliqué sur la jante avec tension préalable, et dont la fonction soit telle que les talons du pneumatique soient en toute circonstance maintenus en contact avec les rebords de la jante.

Un autre but de la présente invention est non seulement d'empêcher le déjantage du pneu suite à une crevaison, mais encore d'une part d'empêcher la rotation du pneu sur la jante en usage tout terrain et ceci même avec une pression de gonflage très faible (de l'ordre de 0,7 à 1 bar), et, d'autre part, d'empêcher l'infiltration à l'intérieur du pneumatique d'eau ou des particules diverses qui provoquent une usure prématurée du pneu, de la jante et éventuellement de la chambre à air si le pneu en comporte une. La Demanderesse a en effet constaté que ces infiltrations sont inévitables si le pneu est monté uniquement avec la chambre à air sur la jante, mais ne se produisent pas si l'on utilise un dispositif connu de l'art antérieur, interposé entre la jante et le pneumatique.

Un autre but de l'invention est de réaliser un dispositif de verrouillage qui répond mieux aux nécessités de la pratique que les dispositifs visant au même but antérieurement connus, notamment en ce qu'il présente un poids réduit et un prix de vente inférieur par rapport aux dispositifs de l'art antérieur et en ce qu'il peut être mis en place facilement à la main et être démonté tout aussi facilement manuellement, alors que les dispositifs de verrouillage connus dans l'art antérieur, requièrent, au moins pour leur démontage, des machines spéciales pour le déblocage.

La présente invention a pour objet un dispositif de montage d'un pneu sur une jante à fond plat comportant un rebord fixe et un rebord amovible en forme de cercle, maintenu en place contre le talon du pneu par un anneau fendu inséré dans une gorge ménagée sur le bord de la jante, le dispositif étant constitué d'un manchon en élastomère entourant la jante qui :

maintient les talons du pneu contre les rebords de la jante,

présente une largeur légèrement supérieure à l'écartement intérieur desdits talons lorsque ceux-ci sont appliqués sur lesdits rebords de la jante,

est pourvu d'un canal traversant pour permettre le passage d'une valve de gonflage, et

comporte une armature rendant le manchon inextensible, lequel dispositif est caractérisé en ce que ladite armature est une armature continue en nappe, qui est arrangée à la partie supérieure du manchon de manière à rendre constant son diamètre extérieur, et en ce que le diamètre intérieur du manchon est, à l'état libre, sensiblement égal au diamètre extérieur du fond sur la jante.

Suivant une modalité particulière de ce mode de réalisation, l'armature est constituée d'une nappe de câblé ou de tissu textile naturel ou synthétique ou de câblé métallique, de type courroie.

Cette armature en nappe inextensible provoque par la compression latérale, une diminution du diamètre intérieur de l'anneau et, par suite, le blocage sur la jante.

Selon un autre mode de réalisation avantageux du dispositif objet de la présente invention, le manchon a une section de forme adaptée à la forme des talons.

Selon une disposition préférée de ce mode de réalisation, le manchon a une section en trapèze, la plus petite base s'appliquant sur la jante, la moyenne des deux bases étant supérieure de 7 % à l'écartement des talons.

Conformément à l'invention, l'épaisseur du manchon est égale à la hauteur des rebords de la jante.

Selon un autre mode de réalisation de l'objet de l'invention, l'élastomère constituant le manchon a une dureté shore d'environ 70.

Selon une variante de réalisation de l'invention, applicable au montage d'un pneu sans chambre à air, il est prévu une gorge centrale pratiquée dans la petite base du manchon pour le logement d'un moyeu de fixation de ladite valve sur la jante, ladite gorge étant reliée à l'espace intérieur du pneu par ledit canal traversant.

L'invention pourra être mieux comprise à l'aide du complément de description qui va suivre, accompagné des dessins dans lesquels :

la figure 1 est une vue en coupe d'un pneu sur une jante monté avec le dispositif conforme à l'invention, et

la figure 2 est une vue en coupe d'une variante d'exécution du dispositif de la figure 1, pour le montage d'un pneu sans chambre à air.

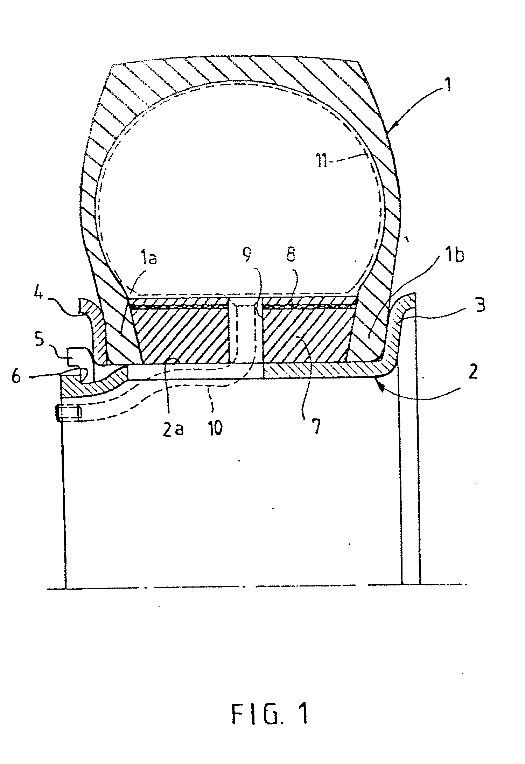

Comme représenté sur le dessin de la figure 1, un pneu 1 est monté sur une jante 2, laquelle comporte un rebord fixe 3 et un cercle amovible 4 maintenu en place contre le talon 1a du pneu par un anneau 5 fendu inséré dans la gorge 6 ménagée sur le bord du fond plat 2a de la jante 2. Sur ce fond plat 2a de la jante, est monté une bande ou manchon 7 en élastomère de dureté shore 70, et dont le diamètre intérieur est le même que le diamètre extérieur du fond 2a de la jante.

Ce manchon qui est très facilement enfilé sur le fond 2a de la jante, comporte sur sa partie supérieure une armature continue 8 (par exemple une nappe de câblé ou de tissu textile naturel ou synthétique ou de câblé métallique, de type courroie), ce qui rend le manchon inextensible et lui permet de conserver un diamètre extérieur constant. Le manchon 7 qui est placé entre les deux talons 1a et 1b, a une section adaptée à la forme des talons ; dans l'exemple de réalisation représenté, il a une section trapézoïdale dont la petite base est appliquée sur le fond 2a de la jante, tandis que la grande base à une longueur supérieure à l'écartement entre les deux talons du pneu lorsque ceux-ci sont appliqués contre les rebords 3 et 4 ; la moyenne des deux bases a une longueur supérieure de 7 % audit écartement, et l'épaisseur du manchon 7 est égale à la hauteur du rebord 3 de la jante.

Ainsi, lors de la mise en place du rebord 4, la matière du manchon comprime par serrage latéral les talons du pneu, et comme le diamètre extérieur du manchon est invariable et constant du fait de l'inextensibilité qui lui est conférée par l'armature continue inextensible 8 incorporée au voisinage de sa surface supérieure et que l'élastomère est déformable mais non compressible, c'est le diamètre intérieur qui a tendance à diminuer, ce qui provoque une adhésion très forte du manchon contre le fond plat de la jante, empêchant ainsi le pneu de glisser autour de la jante quelle que soit la pression du gonflage du pneu.

Le manchon comporte en outre un canal traversant 9 pour le passage de la valve 10 de la chambre à air 11. Sur le dessin de la figure 1, le canal traversant 9 est un simple perçage radial. L'élastomère formant le manchon 7 doit être suffisamment souple pour permettre un bon serrage des talons du pneu et une bonne application sur la jante pour empêcher le glissement. La dureté shore de 70 semble très bonne.

Ce manchon conforme à la présente invention, tout en empêchant la rotation du pneu sur sa jante, évite également la pénétration de l'eau et des diverses particules à l'intérieur du pneu, et permet ainsi pour l'utilisation en tout terrain, une pression de gonflage très faible (environ 0,7 à 1 bar) favorable à l'augmentation de la surface d'appui du pneu sur le sol.

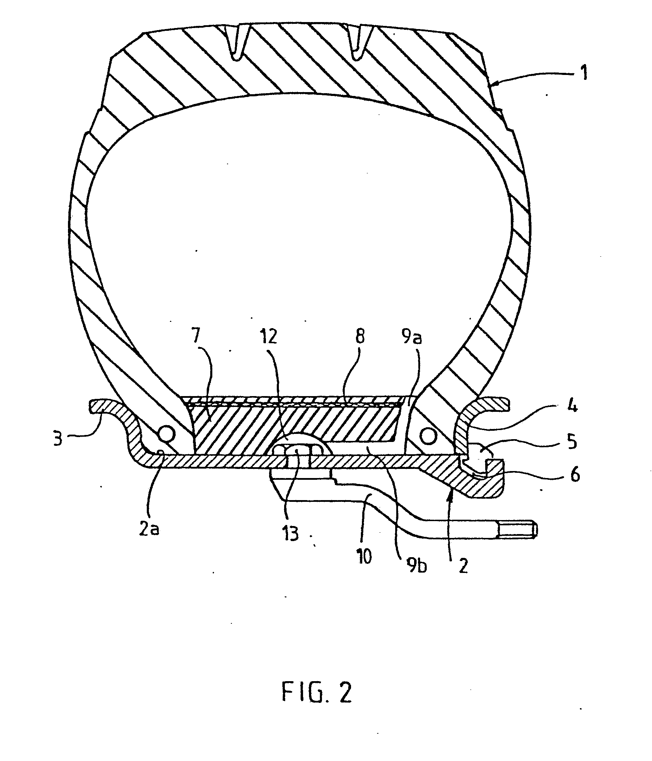

Sur le dessin de la figure 2, on a représenté une variante de réalisation du dispositif de la figure 1, applicable au montage d'un pneu sans chambre à air, dit pneu « tubeless ».

En ce qui concerne les éléments de cette figure qui sont identiques à ceux de la figure 1, ils sont désignés par les mêmes références.

Le manchon 7 comprend une gorge centrale 12 pratiquée dans sa petite base pour le logement du moyeu de fixation 13 de la valve 10 sur la jante 2.

Pour permettre le passage du fluide de gonflage, la gorge centrale 12 est reliée à l'espace intérieur du pneu 1 par un canal traversant 9a, 9b comportant un tronçon sensiblement radial 9a et un tronçon sensiblement axial 9b, ledit tronçon radial 9a étant situé sur ou au voisinage de l'une des faces latérales du manchon.

Le canal traversant peut également être un simple perçage radial situé au droit de la gorge centrale 12.

## Revendications

1. Dispositif de montage d'un pneu (1) sur une jante (2) à fond (2a) plat comportant un rebord (3) fixe et un rebord (4) amovible en forme de cercle, maintenu en place contre le talon (1a) du pneu (1) par un anneau (5) fendu inséré dans une gorge (6) ménagée sur le bord de la jante (2), le dispositif étant constitué d'un manchon (7) en élastomère entourant la jante qui :

maintient les talons (1a, 1b) du pneu contre les rebords (3, 4) de la jante,

présente une largeur légèrement supérieure à l'écartement intérieur desdits talons lorsque ceux-ci sont appliqués sur lesdits rebords de la jante,

est pourvu d'un canal traversant (9, 9a, 9b) pour permettre le passage d'une valve (10) de gonflage, et

comporte une armature (8) rendant le manchon (7) inextensible, lequel dispositif est caractérisé en ce que ladite armature (8) est une armature continue en nappe (8), qui est arrangée à la partie supérieure du manchon de manière à rendre constant son diamètre extérieur, et en ce que le diamètre intérieur du manchon (7) est, à l'état libre, sensiblement égal au diamètre extérieur du fond (2a) de la jante (2).

2. Dispositif selon la revendication 1, caractérisé en ce que l'armature (8) est constituée d'une nappe de câblé ou de tissu textile naturel ou synthétique ou de câblé métallique, de type courroie.

3. Dispositif selon l'une quelconque des revendications 1 et 2, caractérisé en ce que le manchon (7) a une section de forme adaptée à la forme des talons (1a, 1b) du pneu (1).

4. Dispositif selon la revendication 3, caractérisé en ce que le manchon (7) a une section en trapèze, la plus petite base s'appliquant sur la jante (2), la moyenne des deux bases étant supérieure de 7 % à l'écartement des talons (1a et 1b).

5. Dispositif selon l'une quelconque des revendications 1 à 4, caractérisé en ce que l'épaisseur du manchon (7) est égale à la hauteur des rebords (3 et 4) de la jante (2).

6. Dispositif selon l'une quelconque des revendications 1 à 5, caractérisé en ce que l'élastomère constituant le manchon (7) a une dureté shore d'environ 70.

7. Dispositif selon l'une quelconque des revendications 1 à 6, caractérisé en ce que ledit canal traversant (9) est un perçage radial.

8. Dispositif selon l'une quelconque des revendications 1 à 6, applicable au montage d'un pneu sans chambre à air, caractérisé en ce qu'il est prévu une gorge centrale (12) pratiquée dans la petite base du manchon (7) pour le logement d'un moyeu de fixation (13) de ladite valve (10) sur la jante (2), ladite gorge (12) étant reliée à l'espace intérieur du pneu par ledit canal traversant (9a, 9b).

9. Dispositif selon la revendication 8, caractérisé en ce que ledit canal traversant (9a, 9b) présente un tronçon radial (9a) sur ou au voisinage de l'une des faces latérales du manchon (7).

## Claims

1. Apparatus for mounting a tyre (1) on a rim (2) with flat bottom (2a) comprising a fixed flange (3) and a removable flange (4) in the form of a circle, held in position against the beading (1a) of the tyre (1) by a split ring (5) inserted in a groove (6) formed on the edge of the rim (2) the device being formed of an elastomer sleeve (7) surrounding the rim which :

holds the beading (1a, 1b) of the tyre against the flanges (3, 4) of the rim,

has a width slightly greater than the inner spacing between said beadings when they are applied against the flanges of the rim,

is provided with a through channel (9, 9a, 9b) for passing an inflation valve (10) therethrough, and

comprises a reinforcement layer (8) making the sleeve (7) inextensible, which device is characterized in that said reinforcement layer (8) is a continuous layer in the form of a net (8), which is arranged at the upper part of the sleeve so as to make its outer diameter constant, and in that the inner diameter of the sleeve (7) is, in the free state, substantially equal to the outer diameter of the bottom (2a) of the rim (2).

2. Apparatus according to claim 1, characterized in that the reinforcement layer (8) is formed from a net of twisted cable or natural or synthetic textile tissue or from twisted metal cord, of the belt type.

3. Apparatus according to any one of claims 1 and 2, characterized in that the sleeve (7) has a section whose shape is adapted to the form of the beadings (1a, 1b) of the tyre (1).

4. Apparatus according to claim 3, characterized in that the sleeve (7) has a trapezoidal section, the smallest base being applied against the rim (2), the average of the two bases being greater by 7 % than the spacing between the beadings (1a and 1b).

5. Apparatus according to any one of claims 1 to 4, characterized in that the thickness of the sleeve (7) is equal to the height of the flanges (3 and 4) of the rim (2).

6. Apparatus according to any one of claims 1 to 5, characterized in that the elastomer forming the sleeve (7) has a Shore hardness of about 70.

7. Apparatus according to any one of claims 1 to 6, characterized in that said through channel (9) is a radial bore.

8. Apparatus according to any one of claims 1 to 6, applicable to the mounting of a tubeless tyre, characterized in that a central groove (12) is provided formed in the small base of the sleeve (7) for housing a means (13) for fixing said valve (10) on the rim (2), said groove (12) being connected to the inner space of the tyre via said through channel (9a, 9b).

9. Apparatus according to claim 8, characterized in that said through channel (9a, 9b) has a radial section (9a) on or in the vicinity of one of the lateral faces of the sleeve (7).

**Patentansprüche**

1. Vorrichtung zur Montage eines Reifens (1) auf einer Felge (2) mit flachem Boden (2a), die einen festen Rand (3) und einen beweglichen Rand (4) in Form eines Kreises umfaßt, der in Position gehalten wird gegen den Ansatz (1a) des Reifens (1) durch einen Ring (5), der gespalten eingefügt ist in eine Rille (6), die am Rand der Felge (2) angebracht ist, wobei die Vorrichtung besteht aus einer Manschette (7) aus Elastomer, die die Felge umgibt, die

die Ansätze (1a, 1b) des Reifens gegen die Ränder (3, 4) der Felge hält,

eine etwas größere Weite gegenüber der inneren Weite genannter Ansätze darstellt, wenn diese auf die genannten Ränder der Felge aufgebracht werden,

versehen ist mit einer Querleitung (9, 9a, 9b), um die Durchführung eines Ventils (10) zum Aufblasen zu ermöglichen und

eine Umkleidung (8) umfaßt, die die Manschette (7) unausdehnbar macht, wobei die Vorrichtung dadurch gekennzeichnet ist, daß die genannte Umkleidung (8) eine kontinuierliche Mantel-Umkleidung (8) ist, die angeordnet ist am oberen Teil der Manschette in der Weise, daß ihr äußerer Durchmesser konstant gehalten wird, und daß der innere Durchmesser der Manschette (7), im freien Zustand im wesentlichen gleich ist dem äußeren Durchmesser des Bodens (2a) der Felge (2).

2. Vorrichtung gemäß Anspruch 1, dadurch gekennzeichnet, daß die Umkleidung (8) dargestellt wird durch einen Mantel aus Schnur oder aus natürlichem oder synthetischem Textilgewebe oder aus metallischer Schnur von Riemenart.

3. Vorrichtung gemäß einem der Ansprüche 1 und 2, dadurch gekennzeichnet, daß die Manschette (7) einen Teil besitzt von an die Form der Ansätze (1a, 1b) des Reifens (1) angepaßter Form.

4. Vorrichtung gemäß Anspruch 3, dadurch gekennzeichnet, daß die Manschette (7) einen Teil als Trapez hat, wobei die kleinste Basis sich anlegt an die Felge (2), wobei das Mittel der zwei Basen größer ist als 7 % zur Weite der Ansätze (1a und 1b).

5. Vorrichtung gemäß einem der Ansprüche 1 bis 4, dadurch gekennzeichnet, daß die Dicke der Manschette (7) gleich ist der Höhe der Ränder (3 und 4) der Felge (2).

6. Vorrichtung gemäß einem der Ansprüche 1 bis 5, dadurch gekennzeichnet, daß das die Manschette (7) darstellende Elastomer eine « Shore »-Härte von ungefähr 70 hat.

7. Vorrichtung gemäß einem der Ansprüche 1 bis 6, dadurch gekennzeichnet, daß die genannte Querleitung (9) eine radiale Bohrung ist.

8. Vorrichtung gemäß einem der Ansprüche 1 bis 6, anwendbar auf die Montage eines Reifens ohne Luftkammer, dadurch gekennzeichnet, daß sie versehen ist mit einer zentralen Rille (Nute) (12), angebracht in der kleinen Basis (Grundlinie) der Manschette (7) zur Lagerung einer Befestigungs-Nabe (13) von genanntem Ventil (10) auf der Felge (2), wobei genannte Rille (12) verknüpft ist mit dem inneren Raum des Reifens durch genannte Querleitung (9a, 9b).

9. Vorrichtung gemäß Anspruch 8, dadurch gekennzeichnet, daß die genannte Querleitung (9a, 9b) einen radialen (Teil-)Abschnitt (9a) auf oder in der Nähe einer der Seitenflächen der Manschette (7) besitzt.

FIG. 1

FIG. 2